Europäisches Patentamt

European Patent Office

Office européen des brevets

(11) Publication number: **0 307 692**
**A1**

# EUROPEAN PATENT APPLICATION

(21) Application number: 88113977.8

(22) Date of filing: 26.08.88

(51) Int. Cl.⁴: **G06K 7/06 , G06K 13/08**

(30) Priority: 31.08.87 JP 133613/87 U

(43) Date of publication of application:
**22.03.89 Bulletin 89/12**

(84) Designated Contracting States:
**AT BE CH DE ES FR GB GR IT LI LU NL SE**

(71) Applicant: OMRON TATEISI ELECTRONICS
CO.
10, Tsuchido-cho Hanazono Ukyo-ku
Kyoto 616(JP)

(72) Inventor: Mita, Katsuya c/o Omron Tateisi
Electronics Co.
(Patent Center) 20 Igadera Shimokaiinji
Nagaokakyo-shi Kyoto 617(JP)

(74) Representative: WILHELMS, KILIAN &
PARTNER Patentanwälte
Eduard-Schmid-Strasse 2
D-8000 München 90(DE)

(54) IC card reader.

(57) A shutter (4) is attached to an inserting port (11) of an IC card reader so as to be freely opened and closed. A cleaning member (5) is attached to the outer surface of the shutter. When an IC card (1) is inserted into the IC card reader, the shutter is opened by a pressing force of the IC card (1). At least contacts (2) of the IC card which is being inserted come into contact with the cleaning member (5), so that stains deposited on the contacts (2) are removed.

Fig.7

## IC Card Reader

BACKGROUND OF THE INVENTION

The present invention relates to an IC card reader having a plurality of contact members adapted to be come into contact with a plurality of contacts of an IC (Integrated Circuit) card and for transmitting and receiving data to and from a circuit in the IC card. In general, most of IC cards include a CPU (Central Processing Unit) or MPU (Micro-processing Unit or Micro-processor) and a memory (and a battery, if necessary) in a card-shaped supporting medium. The IC card applicable to the IC card reader of the present invention also incorporates an IC card including only a CPU or MPU, an IC card including only a memory, an IC card including an electronic circuit other than the CPU or MPU, and the like.

IC cards are being highlighted as excellent cards in place of magnetic cards and as useful cards adapted to new application uses which cannot be realized by the conventional magnetic cards or the like. The IC card has exposed contacts on the surface of the card. On the other hand, an IC card reader has contact members. When the IC card is inserted into the IC card reader, the contact members are come into contact with the contacts of the IC card, and the electronic circuit in the IC card is electrically connected with the electronic circuit in the IC card reader, so that data, commands, control signals, and the like can be transmitted and received between both electronic circuits.

In the case of an IC card reader in which a shutter is not attached to a card inserting port, dusts enter from the inserting port into the main body, casing or frame of the IC card reader and are deposited to contact members in the main body, so that a fault occurs in the reading/writing operations (transmission and reception of data or the like) and the lives of the contact members are reduced.

To solve this problem, in IC card readers having the magnetic reading function which is applied to an IC card having a magnetic stripe, various kinds of shutters such as a shutter which is opened in response to the reading of the magnetic stripe and the like are attached. In these conventional shutters, even if the entrance of dusts can be prevented, it is impossible to remove the stains on the contacts of the IC card to lead the clean IC card into the main body of the IC card reader. When an IC card in which stains are deposited on the contacts is inserted, a fault also likewise occurs in the reading and writing operations. To prevent the occurrence of such a fault, it is necessary to desing such that the contact members on the side of the IC card reader to be come into contact with the contacts of the IC card are slightly rubbed when they come into contact with each other. However, there is a problem such that the lives of the contacts and contact members are reduced due to the abrasion by the rubbing (wiping).

SUMMARY OF THE INVENTION

In consideration of the foregoing points, it is an object of the present invention to provide an IC card reader in which a shutter is attached to a card inserting port of the IC card reader to thereby prevent the entrance of dusts into the IC card reader, and at the same time, when an IC card is inserted, stains on contacts of the IC card can be cleaned by use of the operation which is executed when the IC card pushes and opens the shutter.

According to the invention, there is provided an IC card reader comprising: a shutter which is attached to an inserting port of the IC card reader so as to be freely opened and closed and which can be opened by a pressing force of an IC card which is inserted; and cleaning means, provided on an outer surface of the shutter, for cleaning at least contacts of the IC card by coming into contact with the contacts when the IC card is being inserted.

According to the invention, the card inserting port is ordinarily closed by the shutter in the inoperative mode, thereby preventing the entrance of dusts into the main body of the IC card reader, and when the shutter is pushed and opened by the IC card which is inserted, the cleaning means attached to the shutter is come into contact with the contacts of the IC card inserted, so that the stains of the contacts can be removed.

Therefore, the invention has the following advantages.

It is prevented that dusts are deposited to the contact members in the IC card reader and the like due to the entrance of the dusts.

The contact members of the IC card reader can be designed to a contact mechanism in which a degree of wiping operation at the time of the contact between the contact members of the IC card reader and the contacts of the IC card is small, so that the lives of the contact members can be prolonged.

The stains of the contacts of the IC card can be removed, so that the contacting reliability with the contact members of the IC card reader is high.

Even if the cleaning means of the shutter is stained due to the long use of the cleaning means, it is not arranged in the IC card reader but attached to the outer surface of the shutter provided at the card inserting port, so that the cleaning means can be easily exchanged and its maintenance can be easily performed.

BRIEF DESCRIPTION OF THE DRAWINGS

Fig. 1 is a plan view of a whole IC card reader in an embodiment of the invention and illustrates a state in which an IC card was inserted to a predetermined position;

Fig. 2 is a side elevational view of the IC card reader and illustrates a state in which a slide member and a contact member supporting member are omitted;

Fig. 3 is a front view of the IC card reader and shows a state in which a part of the shutter is omitted and the slide member and the contact member supporting member are omitted;

Fig. 4 is a cross sectional view taken along the line IV-IV in Fig. 1;

Fig. 5 is a cross sectional view taken along the line V-V in Fig. 1,

Fig. 6 is a cross sectional view taken along the line VI-VI in Fig. 1;

Fig. 7 is a cross sectional view taken along the line VII-VII in Fig. 1;

Fig. 8 is a cross sectional view taken along the line VIII-VIII in Fig. 1;

Fig. 9 is an enlarged diagram of the bottom surface of the contact member supporting member;

Fig. 10 is an enlarged diagram of a part of an IC card;

Figs. 11 to 13 are cross sectional views taken along the line XI-XI in Fig. 1 which are illustrated in accordance with the order of the operations.

DETAILED DESCRIPTION OF THE PREFERRED EMBODIMENTS

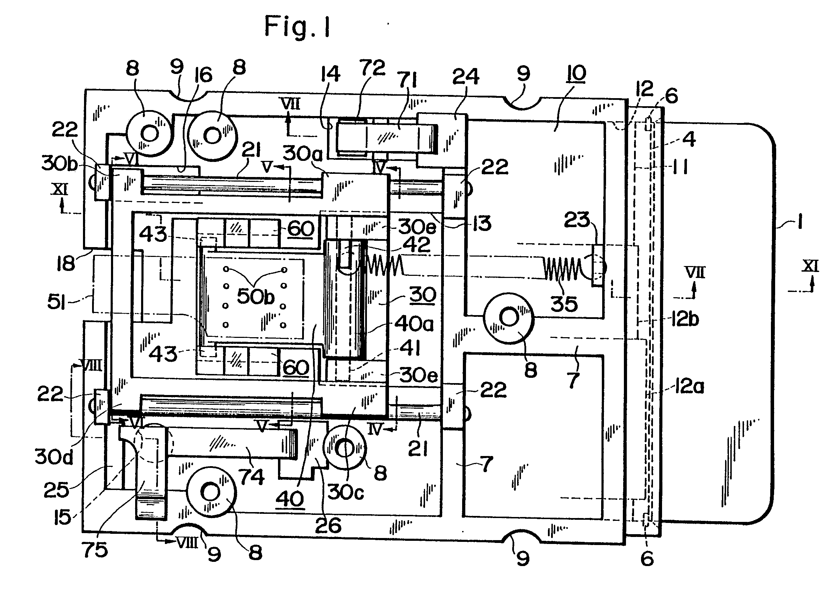

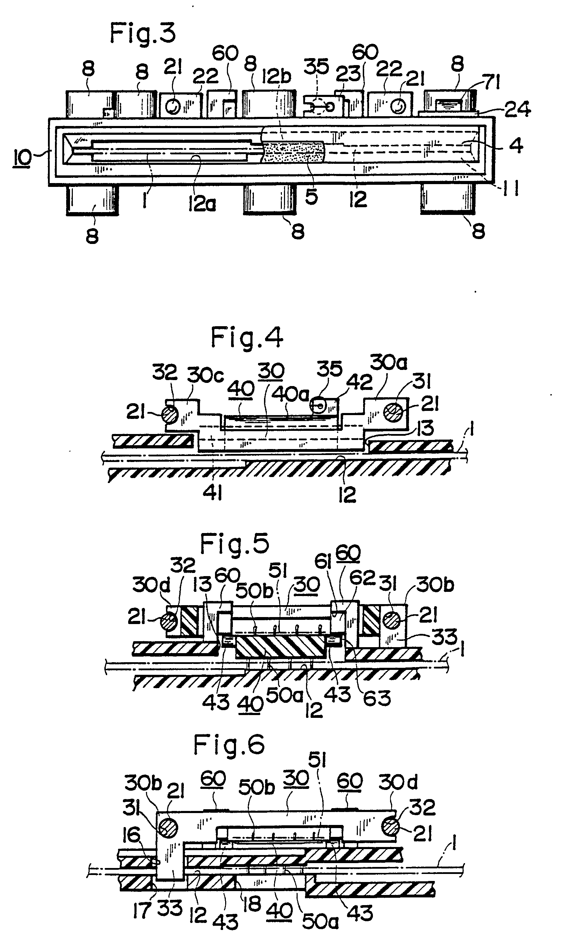

Referring now to Figs. 1 to 3, a frame 10 of an IC card reader is formed like a flat box shape whose whole surface is almost covered excluding only an inserting port 11. The frame 10 is made of a synthetic resin. Practically speaking, the frame 10 consists of an upper half body and a lower half body. These two bodies are coupled by proper fixing or bonding means, thereby constituting an integrated frame 10. An IC card passageway 12 extending laterally from side to side of the frame 10 is formed in the frame 10 in the range from the inserting port 11 to the end portion. As clearly illustrated in Fig. 3, a space portion 12a having a height larger than a normal height of the gap, which corresponds to the thickness of the IC card 1, is formed in the passageway 12 in order to prevent the collision or scratch with the emboss formed on an IC card 1. Another space portion 12b having a height lower than the height of the portion 12a and larger than the normal height of the gap is also formed in the passageway 12 in order to likewise prevent the collision with a plurality of contacts 2 of the IC card 1 (in some of the IC cards, the contacts are slightly projected from the surface of the IC card). By forming the large space portions 12a and 12b in the passageway 12 in this manner, the IC card 1 can be smoothly inserted into the IC card reader without damaging the emboss and contacts of the IC card due to the collision with the inner surface of the passageway 12. The height of the other portions of the passageway 12 and the width of the whole passageway 12 are set so as to be substantially equal to thickness and width of the IC card 1, thereby guiding the IC card 1 so as to be smoothly inserted and ejected. The inserting port 11 has a tapered form which outwardly extends so that the IC card 1 can be easily inserted.

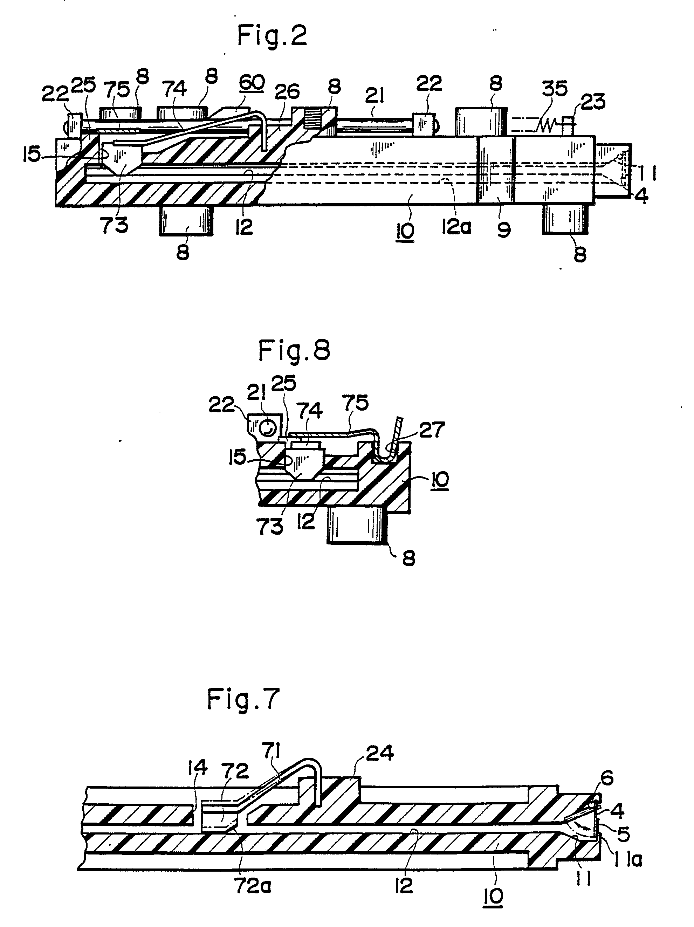

A plurality of bosses 8 to fix the frame 10 (i.e., the IC card reader) to the main body of an apparatus are formed at proper positions on both of the upper and lower plates of the frame 10 (in this case, the terms "upper" and "lower" are used when looking at Figs. 2 and 3 as the reference diagrams). Screw holes are formed in the bosses 8. The frame 10 is fixed by use of screws. In addition, a plurality of arc-shaped concave portions 9 for positioning are formed on both side surfaces of the frame 10. On the other hand, openings or holes or notches 13 to 18 are formed in the upper and/or lower plates of the frame 10 and these will be explained in detail hereinlater. Reference numeral 7 denotes reinforcing ribs which are respectively formed on both upper and lower plates of the frame 10.

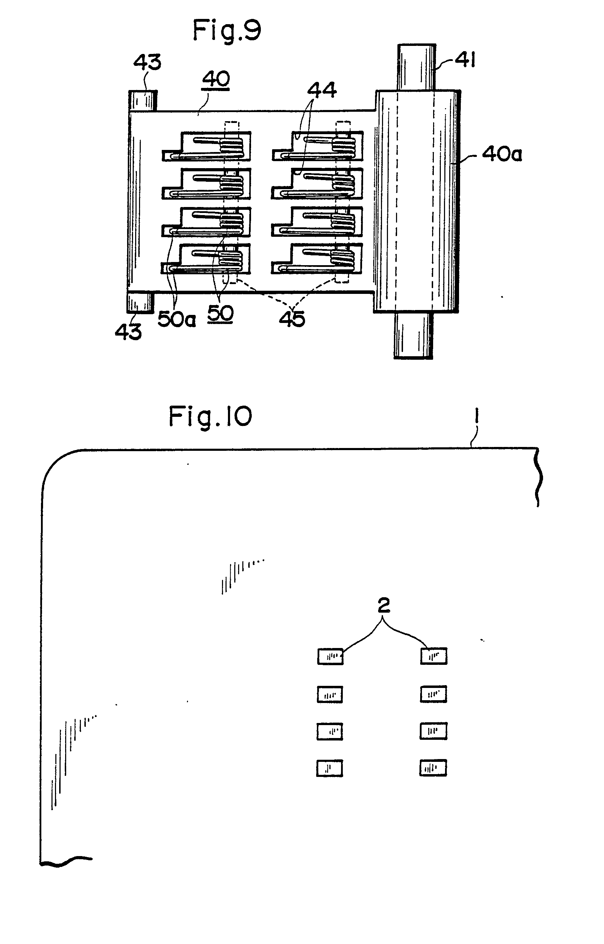

Referring now to Fig. 7 together with Figs. 1 to 3, a shutter 4 is attached to the card inserting port 11. That is, in the upper portions of the both edge portions of the shutter 4, this shutter is fixed to axes 6. The axes 6 are rotatably supported to the frame 10 at both sides of the inserting port 11. Thus, the shutter 4 can swing around the axes 6 as a rotational center. When the IC card 1 is inserted, the shutter 4 is rotated such that the front edge of the IC card pushes and opens the shutter 4 toward the inside.

A cleaning member 5 is adhered to the surface (outside surface) on the side of the shutter 4 where the front edge of the IC card is come into contact and, if necessary, to the lower portion of the shutter 4. It is sufficient that the cleaning member 5 is provided only at a position adapted to be come into contact with the contacts 2 of the IC card 1 which is inserted. There is no need to provide the cleaning member 5 to the whole surface of the shutter 4. The cleaning member 5 is made of, for instance, a cloth (especially, a fuzzy cloth, a cloth impregnated with a polishing agent, or the like), sponge, wool, brush or a combination thereof. Further, a stopper 11a to stop the outward rotation of the shutter 4 is attached to the frame 10 in the lower portion of the inserting port 11.

Therefore, when the IC card 1 is not inserted, the shutter 4 falls by its own weight and comes into contact with the stopper 11a, thereby closing the inserting port 11 and preventing that dusts enter from the outside into the frame 10 of the IC card reader through the card inserting port 11 and are deposited to contact members 50, which will be explained hereinafter. Preferably, an elastic member such as a spring or the like to urge the shutter 4 outwardly is provided.

Referring now to Figs. 4 to 6 and Figs. 11 to 13 in addition to Figs. 1 to 3, the opening 13 is formed in almost the central portion of the upper surface of the frame 10. Guide rods 21 are arranged in parallel at slightly upper positions on both sides of the opening 13. The guide rods 21 are respectively fixed at both ends by projecting shoe portions 22 formed integrally with the frame 10. The guide rods 21 extend in the inserting and ejecting directions of the IC card 1.

A slide member 30 is supported to the guide rods 21 so as to be movable in the longitudinal direction of the guide rods 21. The slide member 30 is formed like an almost rectangular frame when it is seen as a plan view. Bearing portions 30a, 30b, 30c and 30d are provided at four corners of the slide member 30, respectively. The slide member 30 is also made of a synthetic resin. Holes 31 are formed in the bearing portions 30a and 30b. One of the guide rods 21 is slidably disposed in the holes 31. Holes 32 which are partially cut away are formed in the bearing portions 30c and 30d. The other guide rod 21 is slidably disposed in holes 32. Namely, the bearing portions 30c and 30d slidably embrace the other guide rod 21.

Assuming that the end of the frame 10 having the inserting port 11 is the front, a receiving projecting portion 33 downwardly extends from one of the bearing portions 30b on the rear side. The receiving projecting portion 33 passes through the opening 16 formed in the upper plate of the frame 10 and vertically traverses the passageway 12 and further extends into the hole 17 formed in the lower plate of the frame 10.

When the IC card 1 is inserted from the inserting port 11 into the passageway 12, the front edge abuts on the receiving projecting portion 33. By further inserting the IC card, the slide member 30 moves toward the backward portion of the frame 10 against the force of a return spring 35, which will be explained hereinlater. The guide of the slide member 30 is fundamentally accomplished by the bearing portions 30a and 30b on one side and by one of the guide rods 21 penetrating these bearing portions. Since the receiving projecting portion 33 arranged on the side of the bearing portions 30a and 30b, the slide member 30 is smoothly slided. The other bearing portions 30c and 30d loosely support the other guide rod 21 and assist the guide of the slide member 30 and also stabilize the position of the slide member 30. Even if the IC card 1 to be inserted is slightly inclined in the inserting direction, the slide member 30 is come into contact with the IC card at one point (namely, one receiving projecting portion 33), so that the inclination of the IC card 1 will not exert a bad influence on the slide member 30.

A contact member supporting member 40 is swingably supported to the slide member 30. Namely, a fulcrum portion 40a is provided in the front portion of the supporting member 40. An axis 41 penetrates the inside of the fulcrum portion 40a and is fixed. On the other hand, bearing portions 30e are formed in the inside portions of the bearing portions 30a and 30c of the slide member 30. The portions projecting to both sides of the axis 41 are rotatably supported by the bearing portions 30e. The supporting member 40 is also made of a synthetic resin.

A spring shoe 42 is integrally formed on the fulcrum portion 40a and extends toward the almost upper portion. On the other hand, a spring shoe 23 is also integrally formed in the front upper portion of the frame 10. The coil spring (tension spring) 35 is attached between the spring shoes 42 and 23. The spring 35 returns the slide member 30 to its standby position (idle position) and also returns the contact member supporting member 40 to its standby position.

Fig. 9 enlargedly illustrates the bottom surface of the supporting member 40. In this embodiment, eight concave portions 44 are formed in the bottom surface of the supporting member 40. Contact members 50 are fitted into the concave portions 44. The axis 45 is fixed in the concave portions 44. Each contact member 50 is a kind of snap type spring. The coil portion of the contact member 50 is wound around the axis 45. One end of the coil portion downwardly extends to form a contact portion 50a and the other end penetrates the supporting member 40 and is projected over the upper surface, thereby forming a connecting portion 50b.

Fig. 10 enlargedly shows the portion where the contacts 2 of the IC card 1 are formed. In this embodiment, eight contacts 2 are formed on the IC card 1. Eight contact members 50 are provided for the supporting member 40 so as to have substantially the same arrangement with that of the eight contacts 2. The IC card reader is designed in a manner such that each contact member 50 is located just over each corresponding contact 2 of the IC card 1 when the IC card 1 is inserted into the passageway 12 of the IC card reader and its front edge just abuts on the receiving projecting portion 33.

The connecting portions 50b of the contact members 50 projecting over the supporting member 40 are respectively connected to a wiring pattern of a flexible printed circuit board 51 to be led to the outside. A part of the printed circuit board 51 is fixed onto the supporting member 40 and passes through the notch 18 formed in the rear portion of the frame 10 and is led to the lower surface of the frame 10 and connected to a printed circuit board (not shown) attached to the lower surface of the frame 10.

Projections 43 are formed on both sides of the front portion of the supporting member 40. On the other hand, fixed cams 60 are disposed at the positions on both sides of the opening 13. Each of the fixed cams 60 has an upper horizontal cam surface 61 in the direction from the front to the rear, an inclined cam surface 62 which is backwardly downwardly slanted, and a lower horizontal cam surface 63. The projections 43 of the supporting member 40 come into contact with these cam surfaces.

The projections 43 adapted to come into contact with the cam surfaces are not necessarily provided for the supporting member 40. It is also possible to constitute such that both side portions of the supporting member 40 come into contact with the cam surfaces.

Referring now to Figs. 1 and 7, the opening 14 is formed in one side portion of the upper plate of the frame 10. An IC card fixing member 72 is enclosed in the opening 14. The fixing member 72 is fixed to one end of a leaf spring 71. The other end of the leaf spring 71 is inserted and fixed into a projection 24 formed on the frame 10. The fixing member 72 is downwardly urged by the leaf spring 71, thereby pressing the lower surface of the passageway 12. When the IC card 1 is inserted into the passageway 12, the front edge of the IC card 1 abuts on a slant surface 72a of the fixing member 72, so that the fixing member 72 is pushed up against the depressing force of the leaf spring 71. Thus, the fixing member 72 downwardly presses the upper surface of the IC card 1, thereby fixing the IC card 1 by the depressing force.

Referring to Figs. 1, 2, and 8, the hole 15 is formed in the upper plate in the rear portion of the frame 10 and a fixing member 73 is fitted into the hole 15 so as to be freely vertically movable in a manner similar to the above. One end of a leaf spring 74 made of conductive material is inserted into a projection 26 formed on the frame 10. The fixing member 73 is attached to the other end of the leaf spring 74. The fixing member 73 is downwardly pressed by the leaf spring 74. The fixing members 72 and 73 are formed of a soft material or an elastic material so as to prevent the damage or scratch of the IC card.

One end of a contact member 75 made of a spring member and also made of a conductive material is fixed by being pushed into a concave portion 27 of the frame 10. The other end of the contact member 75 extends over the fixing member 73. Although the contact member 75 is downwardly pressed, a part of the other end portion thereof abuts on a convex portion 25 formed on the frame 10, so that the height position of the other end portion is determined. When the IC card 1 is inserted and reached to the rear end portion in the passageway 12, the fixing member 73 is upwardly pushed by the amount of the thickness of the IC card 1. Then, a part of the other end portion of the leaf spring 74 comes into contact with a part of the other end portion of the contact member 75, so that the leaf spring 74 is electrically connected with the contact member 75. Namely, a sensor to detect the insertion of the IC card to a rear end position of the passageway 12 is constituted by the fixing member 73, leaf spring 74 and contact member 75.

The sensor to detect the insertion of the IC card or the state in which the IC card has been inserted to a predetermined position is not limited to the foregoing constitution. For example, the fixing member can be dispensed with and instead, the other end of the leaf spring 74 is curved and formed into a downward arc-like shape.

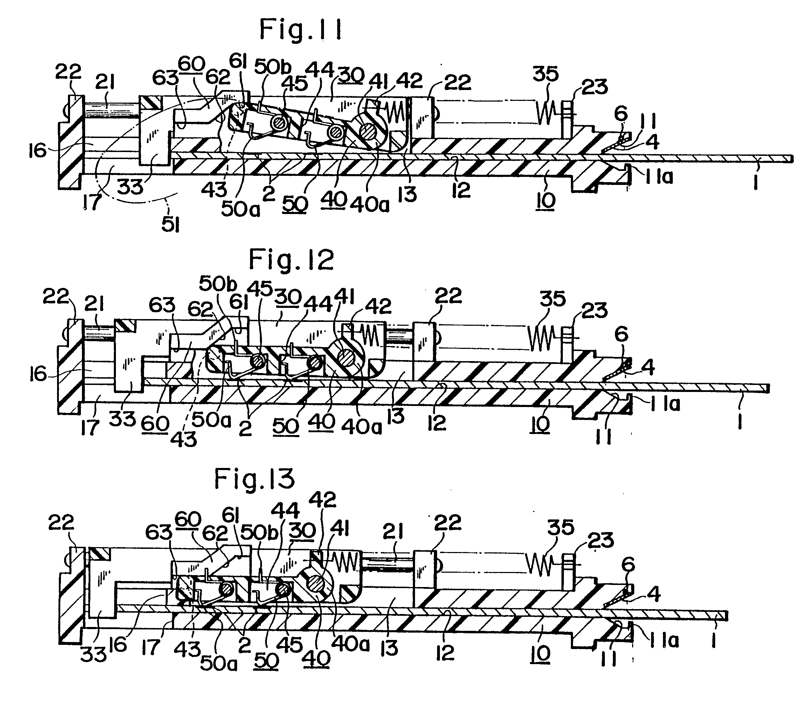

The whole operation will now be described with reference to Figs. 11 to 13.

In Fig. 11, at the standby position (the IC card 1 has not been inserted, yet), the slide member 30 is returned to the front position by the force of the return spring 35 and is held at such a position that the receiving projecting portion 33 abuts on the front edge of the opening 16 or the front portion of the slide member 30 abuts on the front edge of the shoe portion 22 or opening 13. The rear end portion of the contact member supporting member 40 is also upwardly lifted by the force of the spring 35 and the supporting member 40 is held at such a position that the projection 43 abuts on the upper horizontal cam surfaces 61 of the fixed cams 60.

Next, when the IC card 1 is inserted into the card inserting port 11, the shutter 4 is pushed and opened inwardly by the front edge of the IC card. While the IC card 1 is being inserted, the contacts 2 of the upper surface of the IC card 1 are in contact with the cleaning member 5, so that the stains on the contacts 2 are removed by the cleaning member 5. Therefore, after the IC card was inserted, the contacts 2 are preferably come into contact with the contact members 50 without being influenced by the stains and the transmitting and receiving processes of data can be certainly performed.

Although the cleaning member 5 itself is stained by the use for a long time, since the shutter 4 is attached at the entrance of the card inserting port 11 and the cleaning member 5 is attached to the outer surface of the shutter 4, the stain of the cleaning member 5 can be easily removed or the cleaning member can be easily exchanged to a new one.

When the front edge of the inserted IC card 1 abuts on the receiving projecting portion 33 and the IC card 1 is further inserted, the slide member 30 moves backward and the supporting member 40 also together moves in the same direction. As shown in Fig. 12, the projections 43 of the supporting member 40 move from the horizontal cam surfaces 61 and are slided along the cam surfaces 62. Thus, the rear portion of the supporting member 40 descends and the supporting member 40 approaches the horizontal position. The contact portions 50a of the contact members 50 are come into contact with the corresponding contacts 2 of the IC card 1, respectively.

When the IC card 1 is further inserted in this state, as shown in Fig. 13, the projections 43 of the supporting member 40 move from the inclined cam surfaces 62 to the lower horizontal cam surfaces 63. The supporting member 40 is located in parallel with the IC card 1. The contact portions 50a strongly come into contact with the contacts 2, respectively. When the receiving projecting portion 33 abuts on the rear edge of the opening 16, the IC card 1 is completely inserted to a predetermined position.

As mentioned above, the fixing member 73 is pushed up by the inserted IC card 1 and the leaf spring 74 comes into contact with the contact member 75, so that the end of insertion of the IC card is detected. Since the IC card 1 is pressed by the pressing forces of the leaf springs 71 and 74 of the fixing members 72 and 73 and by the spring forces of the contact members 50, the IC card is fixed to the inserted position against the recovery force of the spring 35. Data is communicated between an electronic circuit in the IC card and an electronic circuit in the IC card reader by the electrical contacts between the contact members 50 and the contacts 2 in this state.

As will be understood from Figs. 11 to 13, the contact members 50 of the supporting member 40 are directly come into contact with the contacts 2 of the IC card 1 without sliding the surface of the IC card 1. Even if the IC card 1 is further moved, the supporting member 40 is also moved together with the movement of the IC card 1. Therefore, the contact members 50 are set to the predetermined position of the IC card 1 while keeping the contact relation with the contacts 2 and they do not relatively displace.

When the IC card 1 is pulled out, the slide member 30 and supporting member 40 and the like perform the operations opposite to the foregoing case by the force of the return spring 35 and are returned to the standby positions. In this case as well, the contact members 50 do not slide the surface of the IC card 1. It is desirable to provide a mechanism to hold the shutter 4 to its open position such that when the IC card 1 is pulled out, a force to obstruct the pulling out of the IC card 1 by the shutte 4 does not act on the card.

On the other hand, some of the IC cards have magnetic stripes on a part of the surface of each card. For example, the kind of IC card, ID code and the like are magnetically recorded on the magnetic stripe. In such an IC card, by arranging a magnetic head to the position where the magnetic stripe passes in association with the insertion of the IC card, data recorded on the magnetic stripe can be read or written.

As described above, the leaf spring 74 elastically downwardly pressing the IC card 1 via the fixing member 73 and fixes it, and at the same time, the leaf spring 74 comes into contact with the contact member 75 just over the leaf spring 74 by the upward displacement. Thus, an electric signal flows between both members 74 and 75 and is taken out as a detection. signal of the IC card 1.

In this manner, the fixing member 75 and leaf spring 74 fixes the IC card 1 which has reached the predetermined position, thereby preventing the occurrence of a deviation between the contacts 2 and the contact members 50 due to the movement of the IC card 1 by the vibration or shock. Further, an IC card detection signal is generated by the cooperation with the contact member 75. Consequently, both of the fixing mechanism and the detection switching mechanism of the IC card 1 can be realized by a single mechanism using the spring members 74 and 75.

On the other hand, the contact member 75 downwardly pushes the spring 74 by the elastic force, thereby enabling the fixing force which acts on the IC card 1 to be further increased. The IC card can be strongly supported against the vibration and shock.

The present invention is not limited to the foregoing IC card reader but can be also obviously applied to all types of the IC card readers each having an inserting port.

## Claims

1. An IC card reader comprising:
a shutter (4) which is attached to an inserting port (11) of the IC card reader so as to be freely opened and closed and which can be opened by a pressing force of an IC card (1) inserted; and cleaning means (5), provided on an outer surface of said shutter, for cleaning at least contacts (2) of the IC card by coming into contact with said contacts when the IC card is being inserted.

2. An IC card reader according to claim 1, wherein said shutter is supported by an axis (6) at an upper edge portion of the shutter so as to freely swing, and the shutter swings inwardly of the IC card reader by the inserting operation of the IC card, thereby opening the inserting port.

3. An IC card reader according to claim 1, wherein a stopper (11a) to inhibit the outward opening of the shutter is provided at the inserting port.

4. An IC card reader according to claim 3, wherein said shutter is pressed outwardly by an elastic member.

Fig. I

EP 0 307 692 A1

## Fig.2

## Fig.8

## Fig.7

Fig.3

Fig.4

Fig.5

Fig.6

EP 0 307 692 A1

# Fig.9

# Fig.10

EP 0 307 692 A1

## Fig.11

## Fig.12

## Fig.13

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 489 558 (LA RADIOTECHNIQUE) <br> * Figure 3; page 1, lines 1-5; page 6, lines 10-13 * | 1-4 | G 06 K 7/06 <br> G 06 K 13/08 |
| Y | IBM TECHNICAL DISCLOSURE BULLETIN, vol. 20, no. 11A, April 1978, pages 4563-4564, New York, US; R.J. LAYBOURN: "Mechanical credit card lockout" <br> * Whole article * | 1-4 | |
| A | FR-A-2 172 258 (DOCUTEL CORP.) <br> * Figures; page 2, line 36 - page 6, line 14 * | 1-4 | |

TECHNICAL FIELDS SEARCHED (Int. Cl.4)

G 06 K
G 07 F

The present search report has been drawn up for all claims

| Place of search | Date of completion of the search | Examiner |
|---|---|---|
| THE HAGUE | 21-12-1988 | FORLEN G.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)